# EUROPEAN PATENT APPLICATION

(11) **EP 4 730 778 A1**
(43) Date of publication of application: **22.04.2026**
(21) Application number: 24306713.9
(22) Date of filing: 16.10.2024
(51) Int. Cl.: H04N 19/117, H04N 19/167, H04N 19/172, H04N 19/186, H04N 19/33, H04N 19/59

(54) **CONTROL OF CHROMA SAMPLE LOCATION IN LCEVC**

(71) Applicant: InterDigital CE Patent Holdings, SAS, 75017 Paris (FR)
(72) Inventor: DE LAGRANGE, Philippe, 35830 BETTON (FR); URBAN, Fabrice, 35235 THORIGNE-FOUILLARD (FR); LE PENDU, Mikael, 35700 RENNES (FR); RATH, Gagan Bihari, 35000 RENNES (FR)
(74) Representative: Vossius & Partner Patentanwälte Rechtsanwälte mbB

(57) **Abstract**

Video coding may be performed by controlling chroma sample location, for example, in Low complexity enhancement video coding (LCEVC). For example, a device (e.g., a decoder for video decoding) may determine, for a dimension, a first phase associated with a luma upscaler. The device may set a location of an upsampled luma grid based on the determined first phase. The device may determine, for the dimension, a second phase associated with a chroma upscaler. The device may set a location of an upsampled chroma grid based on the determined second phase and an additional third phase. The device may, based on at least the location of the upsampled luma grid and the location of the upsampled chroma grid, reconstruct an upscaled high-resolution picture from a lower resolution base picture. The device may decode a high-resolution picture, for example, by adding residuals to the upscaled high-resolution picture.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for performing video coding (e.g., encoding and/or decoding) using control of chroma sample location, for example, in low complexity enhancement video coding (LCEVC).

In examples, a device (e.g., a video decoding or a video encoding device) may determine, for a dimension (e.g., horizontal/vertical), a first phase associated with a luma upscaler. The first phase is fixed or derived for a bitstream. The device may determine a location of an upsampled luma grid based on the determined first phase. In an example, the device may determine the location of the upsampled luma grid based on a fourth phase associated with the luma upscaler. The fourth phase may be an additional phase.

The device may determine, for the dimension, a second phase associated with a chroma upscaler. The device may determine a location of an upsampled chroma grid based on the determined second phase and an additional third phase associated with the chroma upscaler.

The device, based on at least the location of the upsampled luma grid and the location of the upsampled chroma grid, may reconstruct an upscaled high-resolution picture from a lower resolution base picture. The device may decode a high-resolution picture, for example, by adding residuals to the upscaled high-resolution picture.

In an example, the first phase may be derived using an indication associated with a collocated luma or a phase indication. The indication associated with the collocated luma or the phase indication may be received via a bitstream. In examples, the first phase may further be derived based on a luma grid location and an indication associated with collocated chroma or based on chroma sample location information.

In an example, the first phase (e.g., coefficients associated with the first phase) may depend on whether a picture is a current picture is one of a frame, a top filed, or a bottom field.

In an example, the device may use at least an alternate set of coefficients for a top field upscale, a bottom field upscale, or if location of a chroma sample changes from the lower resolution base picture to the high-resolution upscaled picture.

A method for video decoding may comprise, for example, determining, for a dimension, a first phase associated with a luma upscaler; determining a location of an upsampled luma grid based on the determined first phase; determining, for the dimension, a second phase associated with a chroma upscaler; determining a location of an upsampled chroma grid based on the determined second phase and an additional third phase associated with the chroma upscaler; based on at least the location of the upsampled luma grid and the location of the upsampled chroma grid, reconstructing an upscaled high-resolution picture from a lower resolution base picture; and decoding a high-resolution picture, for example, by adding residuals to the upscaled high-resolution picture.

A method for video encoding may comprise, for example, determining, for a dimension, a first phase associated with a luma upscaler; determining a location of an upsampled luma grid based on the determined first phase; determining, for the dimension, a second phase associated with a chroma upscaler; determining a location of an upsampled chroma grid based on the determined second phase and an additional third phase associated with the chroma upscaler; based on at least the location of the upsampled luma grid and the location of the upsampled chroma grid, reconstructing an upscaled high-resolution picture from a lower resolution base picture; obtaining residuals, for example, by subtracting the upscaled high-resolution picture from a source picture; and encoding/sending the residuals.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder.
FIG. 3 shows an example video decoder.
FIG. 4 illustrates an example of a second stage of a decoder.
FIG. 5 illustrates an example of the second stage of an encoder.
FIG. 6 illustrates an example of the shapes of two phases of a bicubic upscale filter.
FIG.7 illustrates an example of upscaled samples that may be centered around the original samples for a 2x horizonal and vertical upscale.
FIG. 8 illustrates an example of a chroma sample location information definition.
FIG. 9 illustrates an example of performing 2x upscale both horizontally and vertically starting from chroma location two (2) (e.g., "BT.2020"), resulting in the chroma being shifted 1/2 luma sample up and left.
FIG. 10 illustrates an example of interpolating alternate coefficients for filter phases using the impulse response of the intertwined filter phases.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

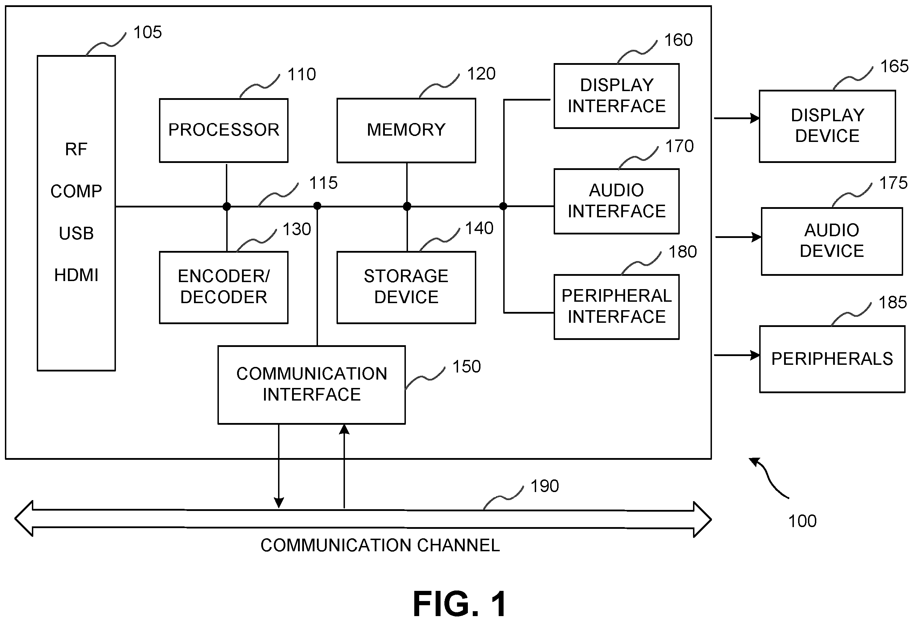

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

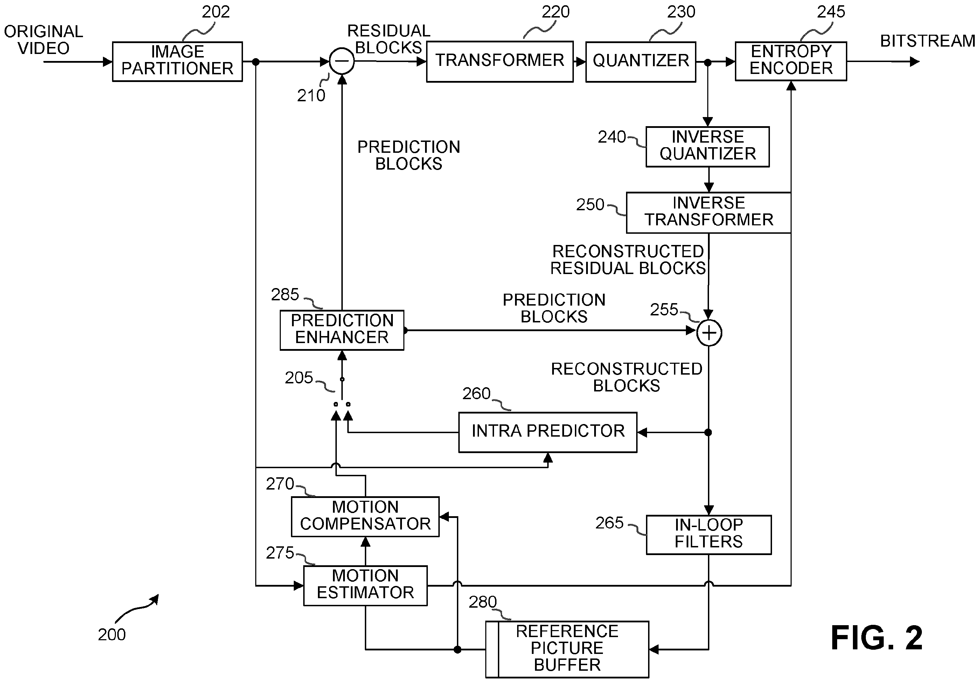

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

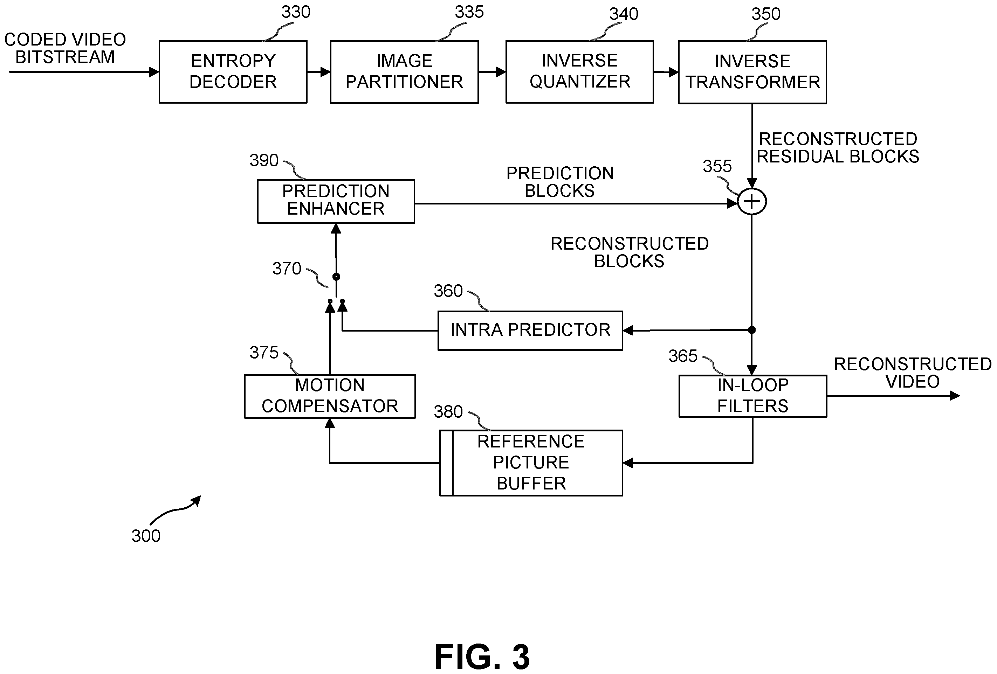

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video picture or a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding (e.g., encoding and/or decoding) using control of chroma sample location in Low complexity enhancement video coding (LCEVC).

Layered (or enhancement) video coding may involve a lower-resolution base layer that may be upscaled and refined with residuals to create a higher-resolution video.

For example, LCEVC may involve (e.g., optionally) upscaling an external video and adding residuals, e.g., to create a higher-resolution video. LCEVC features may be provided for upscaling a picture. LCEVC features may further be provided for residual addition and/or predicting residuals and (de)coding. There may be multiple (e.g., two) stages of upscale and residuals. Features are described herein to illustrate the operation of the second stage. Similar (e.g., the same) upscaler and/or a similar encoding of residuals (e.g., without temporal prediction) may be provided for the first coding stage.

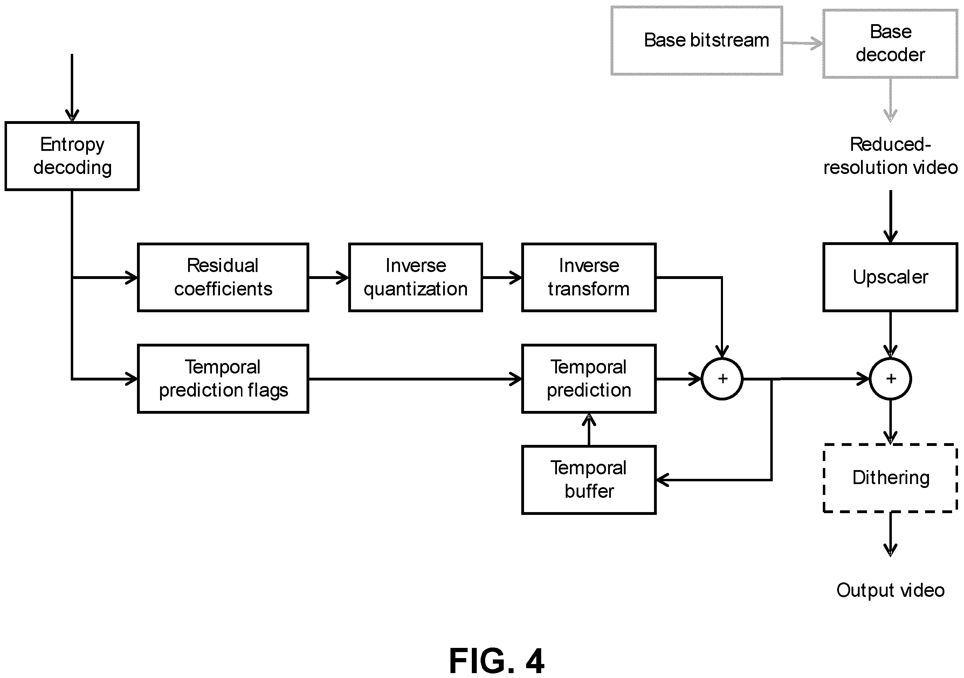

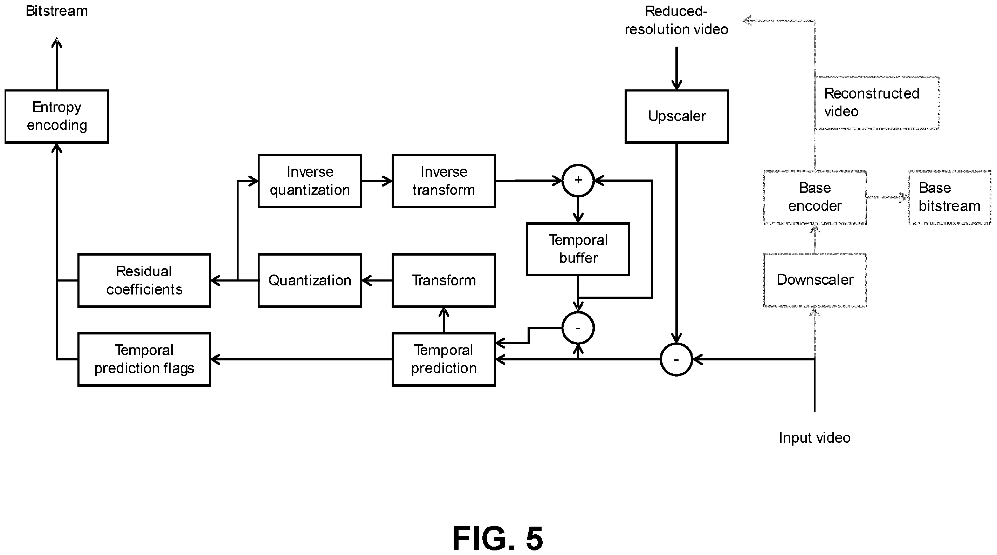

Some embodiments disclosed herein are described with reference to a coding unit (CU) or a block of a video frame (or a video image or picture) to which coding tools may be applied by the video decoder described in FIG. 4 and/or by the video encoder (described below with reference to FIG. 5).

FIG. 4 is a block diagram illustrating an exemplary video decoding apparatus that may be employed by the system 100 (e.g., via the encoder/decoder module 130) described with respect to FIG. 1. FIG. 4 illustrates an example of a stage (e.g., second stage) of a decoder. As shown by example in FIG. 4, residual coefficients may be entropy decoded from the bitstream, dequantized, and inverse transformed (e.g., using a 2x2 or 4x4 Hadamard transform), for example, uniformly on the (e.g., whole) picture. In parallel, temporal prediction flags may be entropy decoded from the bitstream, which may be used to decide whether to add the residuals of the previous picture (e.g., stored in the temporal buffer) to the residuals, and (e.g., finally) to the upscaled picture. Post-processing, for example, adding uniform noise (e.g., dithering shown in dashed lines), may follow. Grayed elements shown in FIG. 4 may be out of scope (e.g., non-normative). In an example, the reduced-resolution video may be obtained from a decoded base bitstream or from a first stage of upscale and residuals.

FIG. 5 is a block diagram illustrating an exemplary video encoding apparatus that may be employed by the system 100 (e.g., via the encoder/decoder module 130) described with respect to FIG. 1. FIG. 5 illustrates an example of the second stage of an encoder. As shown by example in FIG. 5, the upscaled picture may be subtracted from the source picture, resulting in a residual. Temporal prediction may decide whether subtraction of the temporal buffer (e.g., storing residuals of the previous picture) and the decision (e.g., temporal prediction flags) are entropy coded and included in the bitstream. The resulting residuals (e.g., potentially with the temporal prediction subtracted) may (e.g., then) be transformed, quantized, entropy coded, and included in the bitstream. Reconstructed residuals (e.g., resulting from inverse quantization and inverse transform) may be used to update the temporal buffer.

Although not shown in FIG. 5 (e.g., in addition to what is illustrated in FIG. 5), the video sequence (e.g. before being encoded) may go through pre-encoding processing, which may include, for example, one or more of the following: applying a color transform to the input color picture (e.g., conversion from RGB 4:4:4 to YCbCr 4:2:0); performing a remapping of the input picture components, for example, to obtain a signal distribution more resilient to compression (e.g., using a histogram equalization of one of the color components); etc. Metadata, which may be associated with the pre-processing, may be attached to the bitstream. Similarly (e.g., and symmetrically compared to FIG. 5), although not shown in FIG. 4 (e.g., in addition to what is illustrated in FIG. 4), the decoded picture may (e.g., further) go through post-decoding processing, which may include, for example, one or more of the following: an inverse color transform (e.g., conversion from YCbCr 4:2:0 to RGB 4:4:4); an inverse remapping performing the inverse of the remapping process performed in the pre-encoding processing; etc. Post-decoding processing may use metadata derived in the pre-encoding processing. The metadata may be signaled in the bitstream.

The LCEVC upscaler may provide upscaling features, e.g., to 2x upscale, horizontal only, or both horizontal and vertical, etc. Various upscalers used may be employed, for example, nearest neighbor upscaler, bilinear upscaler, bicubic upscaler, modified bicubic upscaler, adaptive bicubic upscaler, etc. The choice of an upscaler from multiple upscalers may be shared by (e.g., all) color components, which may be symmetrical, e.g., in terms of upscaling.

In some examples, LCEVC may use similar (e.g., the same) filter coefficients for chroma and luma. LCEVC may use similar (e.g., the same) symmetric filter phases for a multiphase (e.g., 2-phase) upscaling filter. A bicubic upscaler (e.g., from among various bicubic upscalers) may use, for example, 2-phase 4-taps filters.

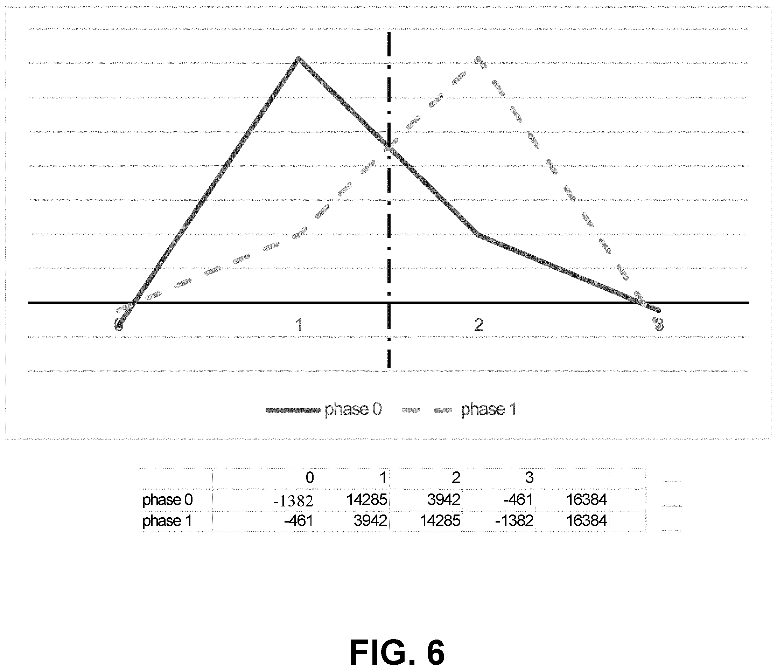

For example, a bicubic upscale filter may use coefficients (e.g., -1382, 14285, 3942, -461) for the first phase, and coefficients (e.g., -461, 3942, 14285, -1382) for the second phase, which may be symmetric to coefficients used in the first phase (e.g., same coefficients in reversed order). A modified bicubic upscaler may use different coefficients (e.g., with symmetric phases). An adaptive bicubic upscaler may use, for example, four (4) signaled coefficients (e.g., coeff1 to coeff4), which may create two (2) symmetric phases, for example: (-coeff1, coeff2, coeff3, -coeff4) and (-coeff4, coeff3, coeff2, -coeff1), as shown by example in FIG. 6). FIG. 6 illustrates an example of the shapes of two phases of a bicubic upscale filter. As shown in FIG. 6, the dashed vertical line may represent the position of the interpolated pixel.

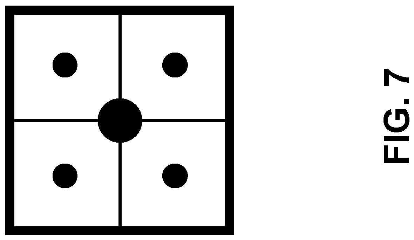

FIG.7 illustrates an example of upscaled samples that may be centered around the original samples for a 2x horizonal and vertical upscale. A bicubic upscale filter with symmetric phases may result in upscaled samples that may be centered around the original samples (e.g., as illustrated by example in FIG. 7) for a 2x horizonal and vertical upscale. As shown in FIG. 7, the large dot and thick square may represent the original sample center and coverage areas. The small dots and thin smaller squares may represent upscaled sample centers and coverage areas. The first filter phase may be used to generate left/top samples shown in FIG. 7. The second filter phase may be used to generate right/bottom samples shown in FIG. 7.

Chroma sampling and luma/chroma alignment may be used in video coding. Chroma resolution may be, for example (e.g., commonly), half of luma, in horizontal (e.g., "4:2:2" format) or in horizontal and vertical directions (e.g., "4:2:0" format). The latter format (e.g., "4:2:0" format) may be the most commonly used format for video compression, for example, because it leverages the lower resolution sensitivity of the human eye to color compared to luminance. A chroma resolution format may be referred to, e.g., in the LCEVC bitstream syntax, as chroma sampling type, which may be the same for base layer and output.

Chroma and luma sampling grid alignment may be used (e.g., may be essential) to reconstruct the original tri-color pixels. The (e.g., most commonly used) alignments (e.g., also called "chroma sample location"), which may be used in 4:2:0 formats, may include, for example, one or more of the following: horizontal collocated chroma (e.g., chroma location "0"), for example, for regular dynamic range HD video (e.g., "BT.709"), which may be the default; and/or horizontal and vertical collocated chroma (e.g., chroma location "2"), for example, for high dynamic range HD or UHD video (e.g., "BT.2020", or "HDR10").

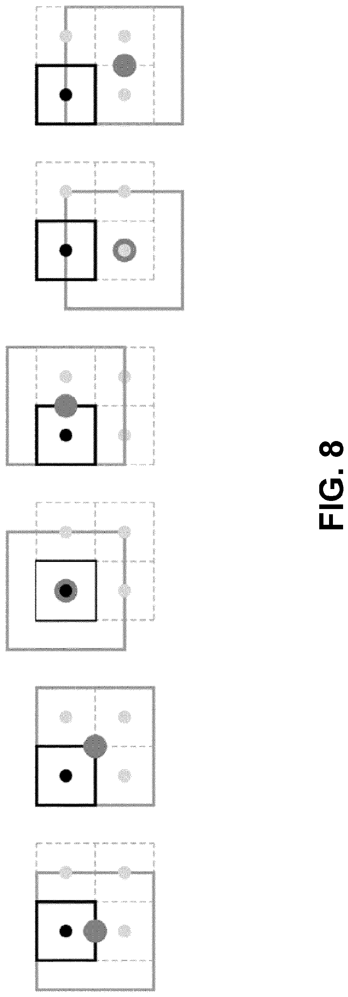

Chroma sample location information may be part of "video usability information," which may be transmitted in the bitstream or may be provided externally. Features associated with chroma sample location information (e.g., in the coding-independent code points (CICP) for video signal type identification) may referred to by coding mechanisms (e.g., LCEVC). FIG. 8 illustrates an example of a chroma sample location information definition. In some examples, values in a chroma sample location information may be from zero (0) to five (5), for example, as illustrated by example from left to right in FIG. 8. As shown in FIG. 8, a black dot and small square may represent a luma sample center and coverage area. A gray dot and large square may represent a chroma sample and coverage area. A light gray small dot and dashed square may be for neighboring luma samples.

A base layer (e.g., in case of LCEVC) may have a (e.g., any) chroma alignment (e.g., even a non-standard chroma alignment), for example, if the output is defined as a standard output. The base video may use a chroma location (e.g., a standard chroma location), such as zero (0) or two (2) (e.g., collocated chroma). The output video may (e.g., also be expected to) comply with a standard chroma location, such as zero (0) or two (2), for example, if LCEVC is used in a scalable manner, e.g., to enhance a base video that may be usable independently.

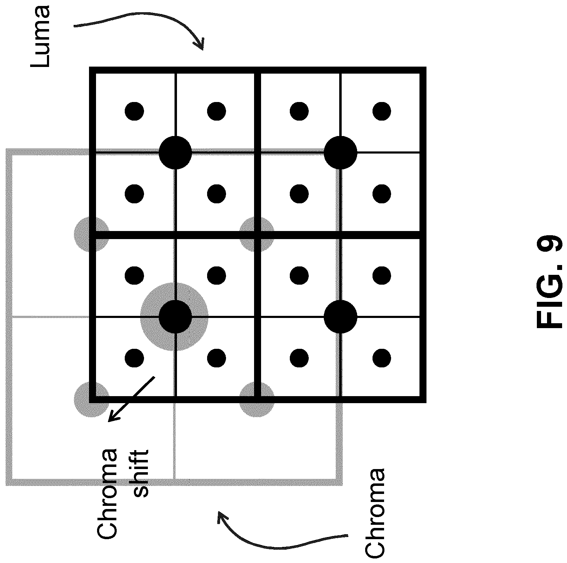

The upscaler of LCEVC may not be capable of maintaining a chroma alignment other than chroma location one (1) (e.g., centered chroma). FIG. 9 illustrates an example of performing 2x upscale both horizontally and vertically starting from chroma location two (2) (e.g., "BT.2020"), resulting in the chroma being shifted 1/2 luma sample up and left. As illustrated by example in FIG. 9, starting from chroma location two (2) (e.g., "BT.2020"), 2x upscale may be performed both horizontally and vertically, which may result in the chroma being shifted 1/2 luma sample up and left. The shifted chroma (e.g., as shown in FIG. 9) mayln some examples, be collocated with top-left luma samples for BT.2020 output video, which may be non-standard (e.g., may not be described using CICP identifiers). As shown in FIG. 9 In some examples, , large black dots and thick black squares may represent base luma sample centers and coverage areas. Small black dots and thin black squares may represent 2x upscaled luma samples. Large gray dots and thick gray squares may represent base chroma samples using chroma location 2 (BT.2020). Small gray dots and thin gray squares may represent 2x upscaled chroma samples.

In some examples, LCEVC may use the same filter coefficients for chroma and luma, and/or symmetric filter phases for the 2-phase upscaling filter, which may result in a centered upsampled grid around original samples, e.g., as illustrated in and explained in description associated with FIG. 7.

Features are described herein to provide support for various luma/chroma sample alignments to the upscaler of LCEVC, for example, by allowing more independent control of chroma and/or luma horizontal/vertical upscaling filters. In examples, allowing more independent control of chroma and/or luma horizontal/vertical upscaling filters may include control of filter phases and/or filter phase coefficients. Features are described herein to allow/support use of a different filter for luma and chroma, and/or for horizontal and vertical upscale.

In some (e.g., alternative) examples, luma/chroma sample alignment may be corrected, for example, in a post-processing stage.

Several examples, which may be implemented alone or in combination, are described herein. In some examples, the number of phases for upscaling filters may be augmented. The starting phase may be determined for chroma horizontal and/or vertical upscale. In some examples, alternate filter phase coefficients for chroma may be specified. A determination may be made whether to use the alternate phases for chroma horizontal and/or vertical upscale. In some examples, alternate filter phases may be derived from other (e.g., regular) filter phases. In some examples, filter phase coefficients may be specified (e.g., independently) for each phase, luma/chroma, and/or horizontal/vertical filters. In some examples, luma/chroma sample alignment may be corrected using a post-filter.

Features are described herein for augmenting the number of phases for upscaling filters and/or determining the starting phase for chroma horizontal and/or vertical upscale.

In some examples of phase augmentation, the number of phases for an upscaling filter may be increased (e.g., from 2 to 8 or 16), for example, to allow control of upscaled sample grid location for a (e.g., each) component (e.g., luma/chroma) and/or a (e.g., each) dimension (e.g., horizontal/vertical). LCEVC may perform (e.g., only) 2x upscale. The augmented phases may be limited/restricted, for example, to phases that may be useful to support centered and/or collocated upsampled luma, and/or the various chroma sample locations, e.g., that may be found in CICP. The chroma filters (e.g., only the chroma filters) may include a higher number of phases, for example, if the upscaled luma sample grid location is fixed.

The starting phase for the luma upscaler may (e.g., first) be determined (e.g., for each dimension), for example, to set the location of the upsampled luma grid. The information may be fixed (e.g., supporting (only) centered grid, such as in LCEVC) and/or derived for the bitstream (e.g., by using a collocated luma flag, and/or phase indications).

The starting phase for the chroma upscaler may (e.g., then) be determined (e.g., for each dimension), for example, to set the location of the upsampled chroma grid. The information may be provided explicitly (e.g., using phase indication) and/or derived (e.g., from the luma grid location, chroma collocated flags, and/or chroma sample location information). Providing/determining the information (e.g., for the starting phase for the chroma upscaler) may (e.g., also) depend on, for example, whether the current image is a frame, top field, or bottom field. The starting phase of the chroma upscaler may (e.g., also) depend on base chroma sample location, for example, if the chroma sample location of base and upscaled video are different (e.g., going from chroma location 0 to chroma location 2). For example, the information may be provided explicitly and/or in the form of chroma collocated flags, e.g., similar to upsampled chroma sample location.

Features are described herein for providing support for specifying alternate filter phase coefficients for chroma and/or determining whether to use the alternate phases for chroma horizontal and/or vertical upscale.

In some examples, (e.g., only) two sets of 2-phases filter coefficients may be used for chroma. For example (e.g., for progressive video), (e.g., only) two sets of 2-phases filter coefficients may be used for chroma if/when the upsampled luma grid is kept fixed and centered, and supporting (e.g., only) chroma sample locations zero (0) and two (2). The two sets of 2-phases filter coefficients for chroma may include, for example, a (e.g., regular) set of coefficients for centered chroma (e.g., vertical upscale for chroma sample location 0) and/or an alternate set of coefficients for collocated chroma (e.g., horizontal upscale and vertical upscale for chroma sample location 2).

In examples, extra alternate sets of filter phase coefficients may be utilized, for example, for top-field chroma upscale, bottom-field chroma upscale, and/or if the chroma sample location changes from a base video to the corresponding upscaled video.

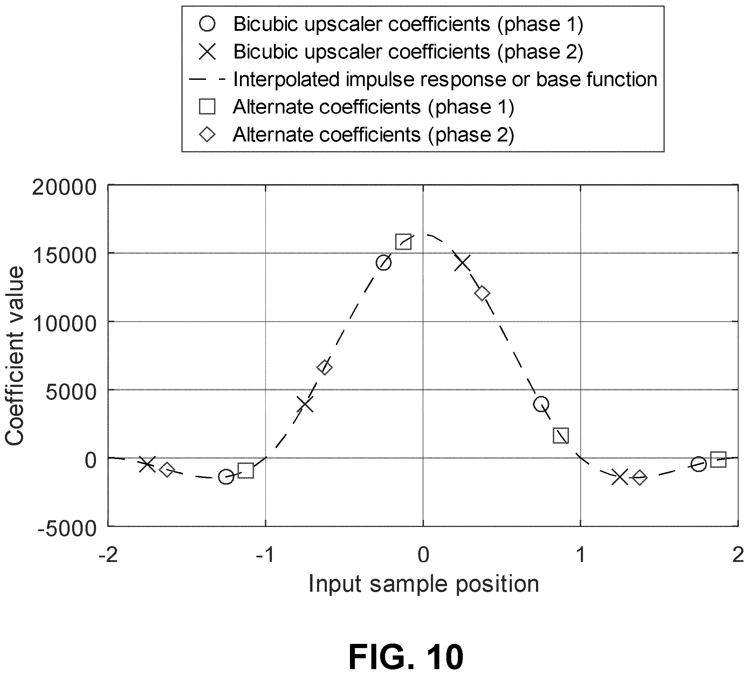

An example of alternate set of coefficients for a bicubic upscaler may be, for example, (-941, 15814, 1641, -134) for the first phase, and (-864, 6624, 12064, -1440) for the second phase.
In some examples, alternate filter phases may be derived from other (e.g., regular) filter phases. The extra phases (e.g., as described herein) and/or alternate coefficients (e.g., as described herein) may be derived, for example, respectively, from other (e.g., regular) phases and/or coefficients (e.g., as defined in LCEVC). The extra phases (e.g., as described herein) and/or alternate coefficients (e.g., as described herein) may be derived, for example, using (e.g., a form of) interpolation based on the phases that may be utilized (e.g., using linear interpolation, cubic splines, a sinc function, lanczos resampling, or, when known, resampling the base function used to create the other (regular) coefficients at the requested phase offsets). Interpolation may be based on, for example, the impulse response made of the intertwined phases of a filter (e.g., an existing filter), e.g., as illustrated by example in FIG. 10. FIG. 10 illustrates an example of interpolating alternate coefficients for filter phases using the impulse response of the intertwined filter phases. The integer values of the final coefficients of a (e.g., each) derived filter phase may be adjusted, for example, so that the sum equals the normalization factor (e.g., 2^14 or 16384 in LCEVC).

Features described herein for specifying filter phase coefficients (e.g., independently) for a (e.g., each) phase, luma/chroma, and/or horizontal/vertical filters.

In some examples, coefficients for the (e.g., two) phases of the upscaling filter for (e.g., all) components (e.g., luma and/or chroma) and/or dimensions (e.g., horizontal and/or vertical) may be signaled. Coefficient signaling may be reduced/limited/restricted to chroma, for example, (e.g., only) if the luma grid location is kept fixed. Signaling may include, for example, using (pre)determined coefficients (e.g. coefficients that may be defined in LCEVC), and/or using the same set of coefficients for multiple (e.g., several) components and/or dimensions.

In some examples, luma/chroma sample alignment may be corrected using a post-filter. For example, chroma sample location of the upsampled picture may be corrected using a post-filter (e.g., operating on chroma) in the horizontal direction and/or in the vertical direction.

The use of the post-filter may be explicitly signaled, derived from signaled information (e.g. chroma collocated flags, frame, top/bottom field), and/or determined based on video signal properties (e.g. chroma sample location found in VUI).

Control of chroma sample location in LCEVC may be utilized in video coding, distribution, and/or consumption.

Control of chroma sample location in LCEVC relates both to the encoder and the decoder. Control of chroma sample location in LCEVC may normatively impact the decoding process. Control of chroma sample location in LCEVC may, e.g., in some examples, impact luma/chroma alignment of decoded output video.

Systems, methods, and instrumentalities are disclosed for performing video coding (e.g., encoding and/or decoding) using control of chroma sample location, for example, in Low Complexity Enhancement Video Coding (LCEVC).

In examples, a device (e.g., a video decoding or a video encoding device) may determine, for a dimension (e.g., horizontal/vertical), a first phase associated with a luma upscaler. The first phase is fixed or derived for a bitstream. The device may determine a location of an upsampled luma grid based on the determined first phase. In an example, the device may determine the location of the upsampled luma grid based on a fourth phase associated with the luma upscaler. The fourth phase may be an additional phase.

The device may determine, for the dimension, a second phase associated with a chroma upscaler. The device may determine a location of an upsampled chroma grid based on the determined second phase and an additional third phase associated with the chroma upscaler.

The device, based on at least the location of the upsampled luma grid and the location of the upsampled chroma grid, may reconstruct an upscaled high-resolution picture from a lower resolution base picture. The device may decode a high-resolution picture, for example, by adding residuals to the upscaled high-resolution picture.

In an example, the first phase may be derived using an indication associated with a collocated luma or a phase indication. The indication associated with the collocated luma or the phase indication may be received via a bitstream. In examples, the first phase may further be derived based on a luma grid location and an indication associated with collocated chroma or based on chroma sample location information.

In an example, the first phase (e.g., coefficients associated with the first phase) may depend on whether a picture is a current picture is one of a frame, a top filed, or a bottom field.

In an example, the device may use at least an alternate set of coefficients for a top field upscale, a bottom field upscale, or if location of a chroma sample changes from the lower resolution base picture to the high-resolution upscaled picture.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2-5 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
a processor configured to:
determine, for a dimension, a first phase associated with a luma upscaler;
determine a location of an upsampled luma grid based on the determined first phase;
determine, for the dimension, a second phase associated with a chroma upscaler;
determine a location of an upsampled chroma grid based on the determined second phase and a third phase associated with the chroma upscaler;
based on at least the location of the upsampled luma grid and the location of the upsampled chroma grid, reconstruct an upscaled high-resolution picture from a lower resolution base picture; and
decode a high-resolution picture by adding a residual to the upscaled high-resolution picture.

2. A device for video encoding, comprising:
a processor configured to:
determine, for a dimension, a first phase associated with a luma upscaler;
determine a location of an upsampled luma grid based on the determined first phase;
determine, for the dimension, a second phase associated with a chroma upscaler;
determine a location of an upsampled chroma grid based on the determined second phase and a third phase associated with the chroma upscaler;
based on at least the location of the upsampled luma grid and the location of the upsampled chroma grid, reconstruct an upscaled high-resolution picture from a lower resolution base picture;
obtain a residual by subtracting the upscaled high-resolution picture from a source picture; and
encode the residual.

3. The device of claim 1 or claim 2, wherein the first phase is fixed or derived for a bitstream, and wherein the processor being configured to determine the location of the upsampled luma grid comprises the processor being further configured to determine the location of the upsampled luma grid based on a fourth phase associated with the luma upscaler.

4. The device of claim 3, wherein if the first phase is derived, the first phase is derived using an indication associated with a collocated luma or a phase indication, wherein the indication associated with the collocated luma or the phase indication are received via the bitstream.

5. The device of claim 4, wherein the first phase is further derived based on a luma grid location and an indication associated with collocated chroma or based on chroma sample location information.

6. The device of claim 4, wherein the first phase depends on whether a picture is a current picture is one of a frame, a top filed, or a bottom field.

7. The device of claim 1 or claim 2, wherein the processor is configured to use at least an alternate set of coefficients for a top field upscale, a bottom field upscale, or if location of a chroma sample changes from the lower resolution base picture to the high-resolution upscaled picture.

8. A video decoding method comprising:
determining, for a dimension, a first phase associated with a luma upscaler;
determining a location of an upsampled luma grid based on the determined first phase;
determining, for the dimension, a second phase associated with a chroma upscaler;
determining a location of an upsampled chroma grid based on the determined second phase and a third phase associated with the chroma upscaler;
based on at least the location of the upsampled luma grid and the location of the upsampled chroma grid, reconstructing an upscaled high-resolution picture from a lower resolution base picture; and
decoding a high-resolution picture by adding residuals to the upscaled high-resolution picture.

9. A video encoding method comprising:
determining, for a dimension, a first phase associated with a luma upscaler;
determining a location of an upsampled luma grid based on the determined first phase;
determining, for the dimension, a second phase associated with a chroma upscaler;
setting a location of an upsampled chroma grid based on the determined second phase and a third phase associated with the chroma upscaler;
based on at least the location of the upsampled luma grid and the location of the upsampled chroma grid, reconstructing an upscaled high-resolution picture from a lower resolution base picture;
obtaining residuals by subtracting the upscaled high-resolution picture from a source picture; and
encoding the residuals.

10. The method of claim 8 or claim 9, wherein the first phase is fixed or derived for a bitstream, and wherein the location of the upsampled luma grid is further determined based on a fourth phase associated with the luma upscaler.

11. The method of claim 10, wherein if the first phase is derived, the first phase is derived using an indication associated with a collocated luma or a phase indication, wherein the indication associated with the collocated luma or the phase indication are received via the bitstream.

12. The method of claim 11, wherein the first phase is further derived based on a luma grid location and an indication associated with collocated chroma or based on chroma sample location information.

13. The method of claim 11, wherein the first phase depends on whether a picture is a current picture is one of a frame, a top filed, or a bottom field.

14. The method of claim 8 or claim 9, comprising using at least an alternate set of coefficients for a top field upscale, a bottom field upscale, or if location of a chroma sample changes from the lower resolution base picture to the high-resolution upscaled picture.

15. The method of claim 14, wherein the first phase or the second phase or the alternate set of coefficients are derived using one of linear interpolation, cubic splines, a sinc function, a lanczos resampling function, or resampling a base function.
